# EUROPÄISCHE PATENTSCHRIFT

(11) **EP 2 171 109 B1**
(45) Veröffentlichungstag und Bekanntmachung des Hinweises auf die Patenterteilung: **03.10.2018**
(21) Anmeldenummer: 08775092.3
(22) Anmeldetag: 15.07.2008
(51) Int. Cl.: C22C 1/04

(54) **BLEIFREIER GESINTERTER GLEITLAGERWERKSTOFF UND SINTERPULVER ZUR HERSTELLUNG DESSELBEN**
LEAD-FREE, SINTERED SLIDING BEARING MATERIAL AND SINTERING POWDER FOR PRODUCING THE LATTER
MATERIAU POUR PALIER LISSE FRITTE, EXEMPT DE PLOMB, ET POUDRE DE FRITTAGE POUR LA PRODUCTION DE CE MATERIAU

(30) Priorität: 20.07.2007 DE 102007033902
(43) Veröffentlichungstag der Anmeldung: 07.04.2010
(73) Patentinhaber: Federal-Mogul Wiesbaden GmbH, 65201 Wiesbaden (DE)
(72) Erfinder: SCHMITT, Holger, 64319 Pfungstadt (DE); ENGHOF, Thomas, 65201 Wiesbaden (DE); SAXTON, David M., Ann Arbor Michigan 48108 (US)
(74) Vertreter: Mehler Achler
(86) Internationale Anmeldenummer: PCT/EP2008/059233
(87) Internationale Veröffentlichungsnummer: WO 2009/013178

(56) Entgegenhaltungen:
- DE-B- 1 293 967
- GB-A- 2 374 086
- US-A- 5 937 268
- US-A1- 2004 055 416
- ANONYMOUS: "Bororn Nitride Powders Grades HCP, HCPH, HCPL, and AC6004" MOMENTIVE PERFORMANCE MATERIALS, [Online] Seiten 1-2, XP002507455 Gefunden im Internet: URL:http://www.advceramics.com/downloads/d ocuments/81511.pdf>

## Beschreibung

Die Erfindung betrifft einen bleifreien Gleitlagerwerkstoff mit einer gesinterten Matrix auf Cu- oder CuSn-Basis und einem Festschmierstoff. Die Erfindung betrifft ferner ein Sinterpulver zur Herstellung desselben, einen Gleitlagerverbundwerkstoff mit einer Stahlstützschicht und einer Lagermetallschicht aus einem solchen aufgesinterten Gleitlagerwerkstoff und ein Gleitelement.

Bleifreie gesinterte Gleitlagerwerkstoffe auf Kupfer- oder Kupfer-Zinn-Basis, insbesondere auf Basis einer Bronzematrix, sind bekannt für ihre gute Wärmeleitfähigkeit sowie ihre hohe Verschleiß- und Korrosionsbeständigkeit im Vergleich zu gleichartigen bleihaltigen Werkstoffen. Der Entwicklung solcher Werkstoffe lag der Wunsch zu Grunde, bleihaltige Gleitlagerwerkstoffe zu ersetzten, da Blei als umweltbelastender Schadstoff eingestuft ist. Da das Blei in dem Werkstoff die Funktion eines Festschmierstoffes hat, muss hierfür aber eine Ersatzsubstanz gefunden werden. Andernfalls kann beispielsweise ein einphasiger Bronzewerkstoff bei Fehlen einer schmierenden Weichphase eine erhöhte Fressneigung unter Mischreibungsbedingungen aufweisen. Unter diesem Gesichtspunkt sind in der Literatur und in der Praxis eine Reihe unterschiedlicher Zusammensetzungen untersucht worden und zur Anwendung gelangt.

Die am häufigsten verwendeten Festschmierstoffe neben Blei sind Molybdändisulfid (MoS₂) und Graphit, welche auch in Gleitschichten basierend auf einem anderen Matrixmaterial als Festschmierstoffe Anwendung finden.

In der US 6,613,453 B2 wird beispielsweise eine gesinterte Gleitschicht auf Kupferbasis mit einem Zinngehalt von 7 bis 13 Gew.-%, einem Silbergehalt von 0,7 bis 2 Gew.-% und optional bis 0,5 Gew.-% Molybdändisulfid sowie optional bis 2 Gew.-% Graphit als Festschmierstoff vorgeschlagen.

Einen anderen Weg beschreitet die EP 0 224 619 A1, welche zur Verbesserung der Korrosionsbeständigkeit vorschlägt, bei einer Kupferlegierung den Bleianteil zu reduzieren und gleichzeitig einen Wismutanteil von 5 bis 25 Gew.-% vorzusehen. Bei einem Verzicht auf Blei wird ein bevorzugter Wismutanteil von 12 bis 20 Gew.-% und ein Zinnanteil von 1 bis 2 Gew.-% genannt.

Hiervon ausgehend schlägt die DE 10 2004 011 831 B3 einen gesinterten Gleitlagerwerkstoff mit 10 bis 15 Gew.-% Zinn, 0,5 bis 10 Gew.-% Wismut, 1 bis 12 Gew.-% Graphit und Rest Kupfer vor. Durch die Zugabe von Graphit und einem erhöhten Zinnanteil kann wiederum der Wismutanteil gesenkt und somit die Kosten des Gleitlagerwerkstoffes reduziert werden. Weiterhin erlaubt diese Zusammensetzung einen vollständigen Verzicht auf Blei und bietet dennoch ausgezeichnete tribologische Eigenschaften. Allerdings ist auch Zinn, welches in diesem Werkstoff als Bindemittel für den Festschmierstoff Graphit eingesetzt wird, ein vergleichsweise teures Legierungselement. Eine Einschränkung des Bindemittels Zinn und zugleich des Schmierstoffes Wismut scheint nicht möglich zu sein.

Weiterhin ist anzumerken, dass Wismut zwar wie Blei einen niedrigen Schmelzpunkt aufweist, jedoch insgesamt härter und spröder ist als Blei. Auch sind die Feststoffschmiermittel Graphit bzw. Molybdändisulfid nicht unproblematisch. Sie gehen Verbindungen mit dem Stahl der Stützschicht und unter Umständen auch mit dem Werkstoff des Gegenläufers ein und beeinflussen so die Laufeigenschaften des Lagers.

Insbesondere bei hohen Belastungen und hohen Temperaturen, wie sie bei automobilen Gleitlager- oder Buchsenanwendungen, insbesondere in Getrieben und Verbrennungsmotoren auftreten können, weisen Kohlenstoff oder Molybdändisulfid als Feststoffschmiermittel in gesinterten Werkstoffen keine ausreichende chemische Beständigkeit auf. Diese negative Eigenschaft wird schließlich dadurch noch verstärkt, dass mit zunehmendem Zinngehalt die Wärmeleitfähigkeit der Matrix sinkt und die Lagertemperatur in Folge dessen ansteigt.

Als Festschmierstoff ist ferner hexagonales Bornitrid (h-BN) bekannt. So wird beispielsweise in der DE 197 08 197 A1 vorgeschlagen, hexagonales Bornitrid zu einem Anteil von 0,1 bis 3,5 Gew.-% neben 0,1 bis 3,5 Gew.-% Graphit in Form eines Pulvergemisches einem Matrixmaterial auf Eisenbasis zugegeben. Das Pulvergemisch wird anschließend verdichtet und unter Kontakt mit Kupfer oder einer Kupferlegierung gesintert, wobei das Kupfer bzw. die Kupferlegierung in die Poren des Sinterkörpers infiltriert wird.

Die Verwendung von hexagonalem Bornitrid als Weichkomponente oder Festschmierstoff ist ferner aus dem Aufsatz "Wear mechanism of Ni-P-BN(h) composite autocatalytic coatings" von León et al., erschienen in Surface & Coatings Technology 200 (2005) 1825 - 1829, bekannt. Hierin wird eine katalytisch aufgetragene Gleitschicht auf einer Nickel-Phosphor-Basis beschrieben und auf seine tribologischen Eigenschaften hin untersucht.

Gegenstand der Erfindung ist indes ein einfach herzustellender Gleitlagerwerkstoff auf Kupfer- oder Kupfer-Zinn-Basis, wobei insbesondere für mechanisch hochbeanspruchte Lager eine gute Wärmeleitfähigkeit und ein gutes Gleitverhalten unter Mischreibungsbedingungen im Vordergrund steht.
Der Einsatz von Bornitrid bzw. h-BN in einer Kupfermatrix wird in der DE 12 93 967 A, in der US 2004/0055416 A1 in der DE 103 05 808 A1 vorgeschlagen. Jedoch sind diesbezüglich noch keine genaueren Erkenntnisse über die Einsatzbedingungen bekannt. Aufgabe der vorliegenden Erfindung ist es, einen verbesserten Werkstoff aus Kupfer oder auf Kupfer-Zinn-Basis mit h-BN als Festschmierstoff bereitzustellen, mit dem sich Gleitlager mit hervorragenden Trockenlaufeigenschaften, einer hohen Belastbarkeit und einer geringen Wechselwirkungsneigung erzeugen lässt, wobei eine gute Sinterfähigkeit und Bindung zu einer Stahlstützschicht gewährleistet ist.
Diese Aufgabe wird erfindungsgemäß durch einen Gleitlagerwerkstoff gemäß Patentanspruch 1, ein Sinterpulver gemäß Patentanspruch 12, einen Gleitlagerverbundwerkstoff gemäß Patentanspruch 10 und ein Gleitelement gemäß Patentanspruch 11 gelöst.
Die Erfinder haben festgestellt, dass es durch Vermischen von hexagonalem Bornitrid-Pulver mit einem Matrixpulver auf Kupfer- oder Kupfer-Zinn-Basis und anschließendem direktem Aufsintern sowie Verwalzen des Pulvergemisches auf einen Stahlrücken möglich ist, einen Materialverbund zu erzeugen, welcher eine ausreichend starke Bindung zwischen dem Stahlsubstrat und dem Lagermaterial einerseits und der Sinterteilchen untereinander andererseits aufweist. Keramisches, hexagonales Bornitrid liegt intergranular vor und geht keinerlei physikalische oder chemische Bindung mit einem metallischen Werkstoff bzw. mit einer metallischen Matrix ein. Im Gegensatz zu Kohlenstoff oder Molybdändisulfid sind gerade die Wechselwirkungen mit dem Stahl der Stützschicht oder dem Metall des Gegenläufers ausgeschlossen, die die Laufeigenschaften des Lagers oder des Gegenläufers beeinträchtigen könnten. Es ist zudem bei Temperaturen bis 700°C vollständig inert gegenüber Gasen und Flüssigkeiten, wie beispielsweise Motor- und Getriebeölen, und deshalb hervorragend zum Einsatz unter den in Fahrzeugmotoren und -getrieben vorherrschenden aggressiven Bedingungen geeignet.

Die Schmierfähigkeit von Blei oder Wismut wird übertroffen, wobei hexagonales Bornitrid weder toxisch noch kanzerogen ist, so dass keine ökologischen Einwände bestehen.

Das hexagonale Bornitrid in dem erfindungsgemäßen Gleitlagerwerkstoff besitzt selbst eine vergleichsweise hohe Wärmeleitfähigkeit. Gerade weil eine Einbindung des Festschmiermittels aber unabhängig von dem Bindemittel Zinn ist, kann durch Reduzierung des Zinngehalts in der Matrix auch deren Wärmeleitfähigkeit erheblich, im Grunde bis zur Wärmeleitfähigkeit von reinem Kupfer erhöht werden. Hierdurch ist einerseits eine schnelle Ableitung von Reibungswärme und andererseits innerhalb des Werkstoffes eine homogene Wärmeverteilung gewährleistet. Dies stellt eine temperaturstabile Mikrostruktur und damit eine dauerhaft gute Verbindung zwischen dem Festschmierstoff und der Matrix auch bei hohen Betriebstemperaturen sicher. Der Gleitlagerwerkstoff ist deshalb insbesondere für die Anwendung in Motoren, Verbrennungsmotoren und Automatikgetrieben geeignet.

Weiterhin sorgt das hexagonale Bornitrid aufgrund seiner hervorragenden Schmiereigenschaften für eine Verringerung der Fressneigung und eine Erhöhung des Verschleißwiderstands einer Buchse oder eines Gleitlagers, insbesondere unter Mischreibungsbedingungen und unabhängig von der Lagertemperatur sowie insbesondere unter Mangelschmierung bzw. nicht konstanten Schmierölverhältnissen.

Der Matrixwerkstoff weist bekanntermaßen eine mittlere Härte auf, die durch Zugabe von Festschmierstoffen noch reduziert wird. Dies ist auch bei der erfindungsgemäßen Verwendung von hexagonalem Bornitrid der Fall. Jedoch nimmt die Härte andererseits bekanntermaßen mit zunehmender Verformung zu. Nun hat sich als zusätzlicher Effekt herausgestellt, dass durch Einbindung von h-BN-Partikeln als Festschmierstoff die Festigkeit des Werkstoffes weniger vom Verformungsgrad der Matrix abhängig ist als bei den bekannten Festschmierstoffen. Dieser Effekt ist umso stärker ausgeprägt, je größer der Bornitridanteil ist. Hieraus ergibt sich der praktische Vorteil, dass der Werkstoff seine Festigkeit und damit seine Formanpassungsfähigkeit, die zunächst durch die konkrete Zusammensetzung eingestellt wird, unabhängig von der Beanspruchung beibehält. Dies erhöht insbesondere bei ungleichmäßiger Belastung eines Lagers, beispielsweise bei Kantenträgern durch Fehlstellungen zwischen Lager und Gegenläufer, die Lebensdauer des Lagers.

Erfindungsgemäß liegt das h-BN in einer feinkörnigen Verteilung mit einer mittleren Korngröße von 5 bis 7 µm vor.

Die Größenverteilung der h-BN-Partikel ändert sich durch das Sintern nicht, sodass von der gleichen mittleren Korngröße der Partikel in dem Sinterpulver wie auch in dem Werkstoff ausgegangen werden kann. Bei der beanspruchten mittleren Korngröße stellt sich eine gute homogene Verteilung der h-BN-Partikel und deshalb auch eine ausreichend starke Einbindung derselben in die Bronzematrix ein. Hierdurch ist eine dauerhafte und über die gesamte Lebensdauer gleich bleibend gute Feststoffschmierung sicherstellt.

Die Partikel aus hexagonalem Bornitrid liegen erfindungsgemäß zumindest teilweise agglomeriert vor, wobei die Agglomerate der Partikel nicht größer als 200 µm sind. Bevorzugt beträgt die Größe der Agglomerate nicht mehr als 120 µm, und besonders bevorzugt nicht mehr als 80 µm. Die Agglomeratgröße wird in bekannter Weise bestimmt, indem aus dem gesinterten Metallband Mikroschliffe entnommen und diese Schliffe unter dem Lichtmikroskop vermessen werden, wobei die jeweils größte beobachtete Länge der Agglomerate herangezogen wird.

Die Bornitrid-Agglomerate sind vorzugsweise nicht größer als die mittlere beobachtete Korngröße der gesinterten Matrix. Diese beträgt, gemessen nach dem ASTM-Standard E-112, vorzugsweise 2 bis 3,5, was einem Querschnitt von 179,6 bis 106,8 µm entspricht.

Werden die h-BN-Agglomerate zu groß, so führt dies zu herabgesetzter Sinterfähigkeit und Bindungsproblemen an der Grenzfläche zwischen der Lagermetallschicht und der Stahlstützschicht. Die Neigung größere Agglomerate zu bilden, hängt von dem h-BN-Gehalt in der Gesamtzusammensetzung des Lagermetalls ab. Der Agglomerationsgrad lässt sich ferner durch eine geeignete Mahltechnik und Mahldauer des Sinterpulvers für einen vorgegebenen h-BN-Gehalt einstellen.

Der Anteil des hexagonalen Bornitrids an der Gesamtzusammensetzung des Gleitlagerwerkstoffs beträgt vorzugsweise 0,05 bis 5 Gew.-%, insbesondere 0,05 bis 3 Gew.-%, besonders bevorzugt 0,25 bis 2 Gew.-%. Die besten Ergebnisse lassen sich in einem Bereich von 0,5 bis 1 Gew.-% Bornitrid in dem Gleitlagerwerkstoff erzielen.

Beträgt der Anteil der h-BN-Partikel weniger als 0,05 Gew.-% an der Gesamtzusammensetzung, so ist keine ausreichende Feststoffschmierung, insbesondere bei Mischreibungsbedingungen sichergestellt. Außerdem kann bei mehrfacher Sinterung und einem zu geringen h-BN-Gehalt eine spontane Blasenbildung an der Oberfläche auftreten.

Die Matrix weist bevorzugt 0 bis 10 Gew.-% Zinn und besonders bevorzugt 2 bis 8 Gew.-% Zinn auf.

In einer besonders vorteilhaften Ausführungsform ist die Matrix aus einer CuSn6Ni- oder einer CuSn8Ni-Bronze gebildet.

Eine vorteilhafte Weiterbildung der Erfindung sieht vor, dass der Gleitlagerwerkstoff ferner eine Hartphase, gebildet durch wenigstens eine Substanz aus der Gruppe bestehend aus Fe₃P, MoSi₂, c-BN (kubisches Bornitrid), aufweist. Die Hartteilchen werden bevorzugt in einer Menge von höchsten 3 Gew.-%, je nach Anwendungsfall besonderes bevorzugt von bis zu 1 Gew.-% hinzu gegeben. Die besten Ergebnisse im Hinblick auf die Verschleißbeständigkeit und die Sinterfähigkeit konnte im Bereich von 0,01 bis 0,5 Gew.-% beobachtet werden.

Der erfindungsgemäße Gleitlagerwerkstoff wird vorzugsweise in einem Gleitlagerverbundwerkstoff mit einer Stahlstützschicht und der darauf aufgesinterten Gleitlagerschicht verwendet. Besonders bevorzugt wird aus einem solchen Gleitlagerverbundwerkstoff ein Gleitelement, insbesondere eine Buchse oder eine Lagerschale erzeugt.

Weitere Aufgaben, Merkmale und Vorteile der Erfindung werden nachfolgend anhand eines Ausführungsbeispiels mit Hilfe der Zeichnungen näher erläutert. Es zeigen:
- Figur 1: eine perspektivische Darstellung einer Lagerhalbschale mit den Merkmalen der Erfindung,
- Figur 2: einen vergrößerten geschnittenen Ausschnitt durch die Lagerschale gemäß Figur 1, und
- Figur 3: Diagramme aus Prüfläufen eines erfindungsgemäßen Gleitelements.

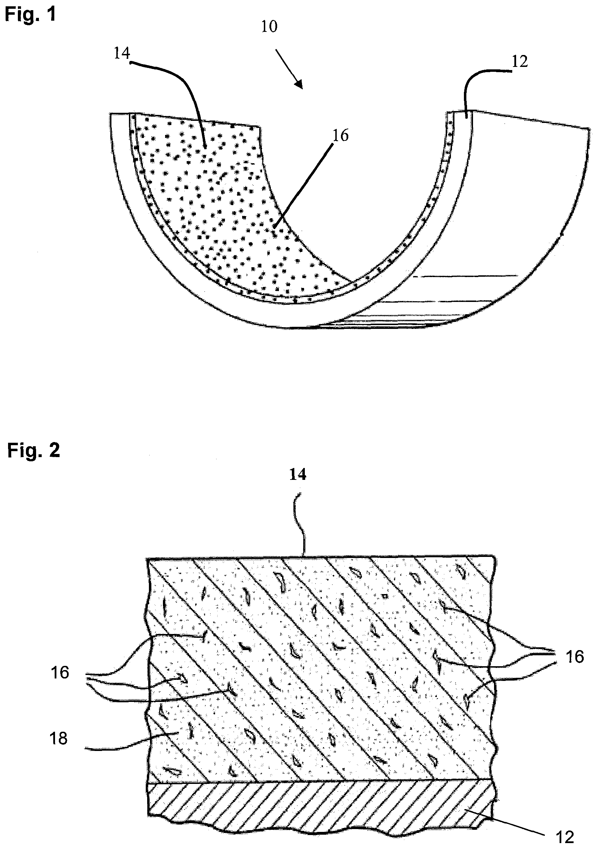

Die in Figur 1 gezeigte Ausführungsform des erfindungsgemäßen Gleitelements als Lagerhalbschale 10 wird beispielsweise im großen Pleuelauge zur Kurbelwellenlagerung oder als Hauptlager der Kurbelwelle in Verbrennungsmotoren eingesetzt. Sie weist eine radial außenliegende Stahlstützschicht 12 und eine radial auf der Innenseite der Stahlstützschicht 12 aufgesinterte Lagermetallschicht 14 auf. Die Lagermetallschicht 14 weist erfindungsgemäß eine Bronzematrix 18 und in der Bronzematrix hinreichend homogen verteilt hexagonale Bornitrid-Partikel 16 als Festschmierstoff auf, wie in Figur 2 gezeigt ist.

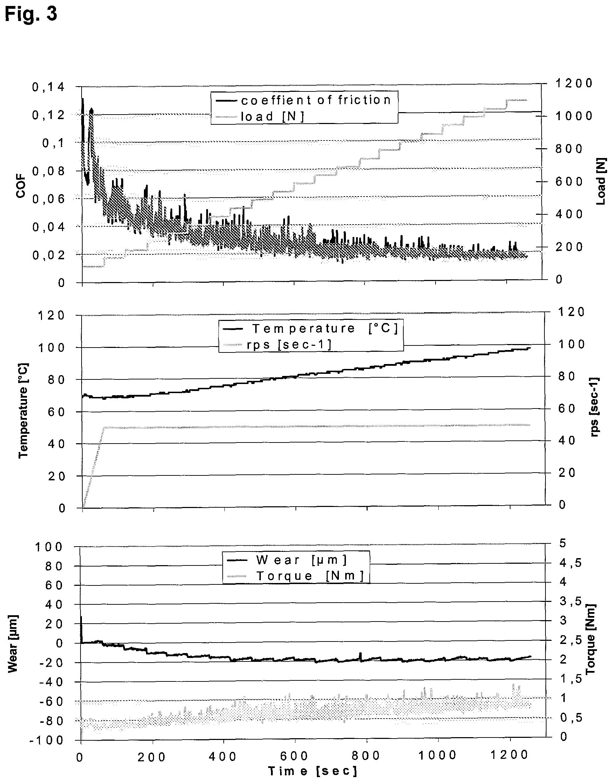

Der Gleitlagerwerkstoff der Lagermetallschicht 14 mit einer Matrix aus Kupfer oder einer Kupfer-Zinnlegierung, insbesondere einer Bronze, und mit Partikeln aus hexagonalem Bornitrid ist sehr gut sinterfähig und kann mit ausreichender Bindungsfestigkeit ohne Aufbringen einer Zwischenschicht direkt auf die Stahlstützschicht 12 aufgesintert werden. Die Ergebnisse eines Stift-Scheibe-Prüflaufs mit einer Probe aus dem erfindungsgemäßen Gleitlagerwerkstoff mit einer CuSn8Ni-Matrix und 1 Gew.-% h-BN, bei welchem die Probe mit 4mm Durchmesser gegen eine rotierende Scheibe aus einem Kohlenstoffstahl 100Cr6 angedrückt wurde, ergab die in Figur 3 dargestellten Messwerte. Im oberen Diagramm der Figur 3 ist der Reibwert (durchgezogene Linie) gegen die Dauer des Versuches aufgetragen. Während der Messung wurde die Belastungskraft stufenweise von 100 N auf 1100 N gesteigert. Es zeigt sich, dass der Werkstoff insgesamt einen sehr niedrigen Reibwert aufweist, der auch bei Maximalbelastung keine Anzeichen von einem "Fressen" des Materials zeigt. Ausgehend von etwa 0,06 sinkt der Wert innerhalb einer Einlaufzeit von etwa 10 Minuten auf etwa 0,015 und verändert sich danach kaum mehr.

Verbunden mit dem niedrigen konstanten Reibwert ist ein geringer Temperaturanstieg am Stift, der auf eine hohe Wärmeleitfähigkeit des Gleitlagerwerkstoffs hindeutet. Im mittleren Diagramm von Figur 3 ist zu erkennen, dass über eine Dauer von 22 Minuten bei konstanter Drehzahl ein Temperaturanstieg von 60° auf 80° zu verzeichnen ist.

Das untere Diagramm in Figur 3 zeigt einerseits den Verschleißwert und andererseits das Reibmoment. Das Diagramm zeigt, dass nach einer Einlaufzeit von 10 Minuten trotz Steigerung der Belastungskraft kein nennenswerter Verschleiß mehr stattfindet. Gleiches spiegelt die Reibmomentkurve wieder. Diese zeigt, dass außer einem durch die steigende Belastungskraft bedingten moderaten Anstieg keine Verschlechterung der Gleiteigenschaften des Werkstoffes zu erkennen ist.

In der nachfolgenden Tabelle 1 wurde an vier Proben des erfindungsgemäßen Gleitlagerverbundwerkstoffes mit einer Stahlstützschicht und einer aufgesinterten Lagermetallschicht, bestehend aus einer CuSn8Ni-Matrix und 1,0 Gew.-% h-BN-Partikeln, dessen Verhalten bei Umformung untersucht. Die Proben 1 bis 4 wiesen eingangs alle eine Stahlstützschicht identischer Dicke und mit steigender Probennummer eine aufgetragene, ungesinterte Pulverschicht mit zunehmende Dicke auf. Die Proben wurden nach dem ersten Sintern auf ein Zwischenmaß gewalzt, danach die Dicken- und die Härtewerte der einzelnen Schichten gemessen. Nach einem weiteren Sinterschritt und einem weiteren Walzschritt, in dem die Dicke um lediglich ca. 5 % reduziert wird und das Gleitlagermaterial auf Endmaß gebracht wurde, wurden die Dicken und Härten der einzelnen Schichten erneut gemessen. Es zeigt sich, dass im Wesentlichen unabhängig von der Eingangsdicke der Sinterschicht bei gleichem Endmaß und damit unabhängig von dem Umform- oder Verdichtungsgrad der Lagermetallschicht diese eine gleich bleibende Härte im fertig gewalzten Zustand aufweist. Die Einstellung der geringen Endhärte des Materials beruht im Wesentlichen auf dem zweiten Sinterschritt und dem weiteren Walzschritt.

**Tabelle 1**

| | **Walzschritt** | **1** | **2** | **3** | **4** |
|---|---|---|---|---|---|
| **Gesamtdicke der Probe nach dem ersten Sintern [mm]** | | 2,27 | 2,32 | 2,36 | 2,4 |
| **Dicke der Stahlschicht [mm]** | **zwischen** | 1,10 | 1,12 | 1,08 | 1,08 |
| | **fertig** | 1.05 | 1,04 | 1 | 1 |
| **Dicke der Lagermetallschicht [mm]** | **zwischen** | 0,59 | 0,58 | 0,62 | 0,62 |
| | **fertig** | 0,56 | 0,57 | 0,58 | 0,6 |
| **Gesamtdicke[mm]** | **zwischen** | 1,69 | 1,70 | 1,70 | 1,70 |
| | **fertig** | 1,61 | 1,61 | 1,58 | 1,6 |
| **Gesamtreduktion [%]** | **-** | 29 | 31 | 33 | 33 |
| **Stahlhärte [HBW 1/30/10]** | **zwischen** | 195 | 201 | 195 | 190 |
| | **fertig** | 140 | 139 | 145 | 147 |
| **Lagermetallhärte [HBW 1/5/30]** | **zwischen** | 185 | 177 | 181 | 177 |
| | **fertig** | 93 | 82 | 91 | 94 |

Ausgehend von demselben Matrixwerkstoff CuSn8Ni wurde die Härte der Lagermetallschicht einerseits in Abhängigkeit von dem h-BN-Gehalt und anderseits von dem Umformgrad der Lagermetallschicht untersucht. Die Messwerte sind in Tabelle 2 wiedergegeben. Ausgehend von dem reinen gesinterten Matrixwerkstoff (Probe 5) lässt sich feststellen, dass dieser eine vergleichsweise hohe Härte im Ausgangszustand und eine starke Zunahme der Härte in Abhängigkeit von dem Umformgrad aufweist. Mit zunehmendem h-BN-Gehalt nimmt sowohl die Ausgangshärte als auch die Härtezunahme bei Umformung der Lagermetallschicht ab. Dies bedeutet zum einen, dass sich bei hohem h-BN-Gehalt eine weiche Lagermetallschicht erzeugen lässt und zum anderen, dass sich die Härte der Schicht in diesem Bereich kaum mehr durch eine Nachbearbeitung sondern im Wesentlichen durch den h-BN-Gehalt einstellen lässt. Der Vorzug einer solchen Schicht ist ihre hohe Formanpassungsfähigkeit, die weitgehend unabhängig vom Verformungsgrad und damit von der Beanspruchung ist. Deshalb bleibt die Formanpassungsfähigkeit auch unter ungleichmäßigen Belastungssituationen im Einsatz des Werkstoffes nahezu unverändert erhalten. Will man indes die Härte der Lagermetallschicht in einem weiteren Bereich einstellen können, so muss ein niedrigerer h-BN-Gehalt gewählt werden, wobei dann eine Anpassung zunehmend auch wieder über den Umformungsgrad erzielt werden kann.

**Tabelle 2**

| Probe | h-BN-Gehalt [Gew.-%] | Härte | Umformen [%] |
|---|---|---|---|
| | | 1. Zeile HBW1/30/10 | |
| | | 2. Zeile HBW1/5/30] | |
| 5 | 0 | 144 | 20 |
| | | 104 | 6,7 |
| 6 | 0,5 | 140 | 19,1 |
| | | 95 | 7,4 |
| 7 | 1 | 138 | 20,6 |
| | | 97 | 6,7 |
| 8 | 2 | 126 | 20 |
| | | 93 | 6,7 |
| 9 | 4 | 98 | 21,4 |
| | | 83 | 3,9 |

In der nachfolgenden Tabelle 3 ist der erfindungsgemäße Gleitlagerwerkstoff einem Vergleichswerkstoff aus CuSn3Pb23 mit Blei als Festschmierstoff und zwei Vergleichswerkstoffen bestehend aus der reinen CuSn8Ni-Matrix gegenübergestellt. Die beiden Vergleichswerkstoffe der reinen Bronze-Matrix wurden durch unterschiedliche Verdichtung im letzten Walzschritt auf verschiedene Ausgangshärten des Bandmaterials von 105 HBW bzw. 130 HBW eingestellt. Typische bleihaltige Lagermetallwerkstoffe haben eine vergleichsweise geringe Härte von 70 HBW. Es ist auch bekannt, dass diese Werkstoffe eine sehr geringe Verfestigung durch die Umformung zu einer Lagerschale erfahren. Sie haben aufgrund dieser Eigenschaften ein vorbildliches Formanpassungsvermögen, welches sich auch bei Umformung und unter Beanspruchung im Betrieb nicht verschlechtert. Die bleihaltigen Werkstoffe gelten daher in den meisten Anwendungsfällen als Maßstab.

Es hat sich nun gezeigt, dass der erfindungsgemäße Gleitlagerwerkstoff bei Optimierung des Anteils an hexagonalem Bornitrid, dessen Partikelgröße, Agglomerationsgrad sowie bei Verwendung des geeigneten Matrixmaterials eine Reihe vorteilhafter Eigenschaften einstellen lässt und sogar näherungsweise das Formanpassungsvermögen und die Beständigkeit von bleihaltigen Werkstoffen erreichen lässt. Hierbei übertrifft der erfindungsgemäße Werkstoff die bleihaltigen Werkstoffe jedoch hinsichtlich seiner guten Wärmeleitfähigkeit, und schließlich dadurch, dass seine Verwendung auf keine ökologischen Einwände stößt.

**Tabelle 3**

| Härte [HBW 1/5/30] | Bandmaterial (Lagermetall) | Lagerschale (Lagermetall) |
|---|---|---|
| CuSn8Ni + h-BN 1 Gew.-% | 92 | 104 |
| Vergleichswerkstoffe: | | |
| CuSn3Pb23 | 70 | 85 |
| CuSn8Ni weich | 105 | 125 |
| CuSn8Ni hart | 130 | 150 |

### Bezugszeichenliste

- 10: Lagerhalbschale
- 12: Stahlstützschicht
- 14: Lagermetallschicht
- 16: Bornitrid-Partikel
- 18: Matrix

## Patentansprüche

1. Bleifreier Gleitlagerwerkstoff mit einer gesinterten Matrix (18) aus Cu oder auf CuSn-Basis und einem Festschmierstoff, der hexagonales Bornitrid enthält, **dadurch gekennzeichnet,**
**dass** das hexagonale Bornitrid in einer feinkörnigen Verteilung mit einer mittleren Partikelgröße von 5 µm bis 7 µm vorliegt, wobei Agglomerate der Partikel (16) aus hexagonalem Bornitrid nicht größer als 200 µm sind.

2. Gleitlagerwerkstoff nach Anspruch 1, **dadurch gekennzeichnet,**
**dass** die Agglomerate nicht größer als 80 µm sind.

3. Gleitlagerwerkstoff nach einem der vorstehenden Ansprüche,
**dadurch gekennzeichnet,**
**dass** die Agglomerate der Partikel nicht größer als die mittlere beobachtete Korngröße der gesinterten Matrix (18) ist.

4. Gleitlagerwerkstoff nach Anspruch 3, **dadurch gekennzeichnet,**
**dass** die mittlere beobachtete Korngröße der gesinterten Matrix (18), gemessen nach dem ASTM-Standard E-112, 2 bis 3,5 beträgt.

5. Gleitlagerwerkstoff nach einem der vorstehenden Ansprüche,
**dadurch gekennzeichnet,**
**dass** das hexagonale Bornitrid in einer Menge von 0,05 bis 5 Gew.-% der Gesamtzusammensetzung in dem Gleitlagerwerkstoff vorliegt.

6. Gleitlagerwerkstoff nach Anspruch 5, **dadurch gekennzeichnet,**
**dass** das hexagonale Bornitrid in einer Menge von 0,5 bis 1 Gew.-% der Gesamtzusammensetzung in dem Gleitlagerwerkstoff vorliegt.

7. Gleitlagerwerkstoff nach einem der vorstehenden Ansprüche,
**dadurch gekennzeichnet,**
**dass** die Matrix (18) 0 bis 10 Gew.-% Zinn aufweist.

8. Gleitlagerwerkstoff nach Anspruch 7, **dadurch gekennzeichnet,**
**dass** die Matrix (18) aus einer CuSn6Ni- oder einer CuSn8Ni-Bronze gebildet ist.

9. Gleitlagerwerkstoff nach einem der vorstehenden Ansprüche,
**gekennzeichnet durch**
eine Hartphase gebildet durch wenigstens eine Substanz aus der Gruppe bestehend aus Fe₃P, MoSi₂, c-BN.

10. Gleitlagerverbundwerkstoff mit einer Stahlstützschicht (12) und einer aufgesinterten Lagermetallschicht (14) aus einem Gleitlagerwerkstoff nach einem der vorstehenden Ansprüche.

11. Gleitelement aus einem Gleitlagerverbundwerkstoff nach Anspruch 10.

12. Sinterpulver zur Herstellung eines Gleitlagerwerkstoffes nach einem der Ansprüche 1 bis 9 mit einem Matrixpulver aus Cu oder auf CuSn-Basis und mit Partikeln (16) aus hexagonalem Bornitrid, **dadurch gekennzeichnet, dass** die Partikel (16) aus hexagonalem Bornitrid in einer feinkörnigen Verteilung mit einer mittleren Korngröße von 5 µm bis 7 µm vorliegen, wobei Agglomerate der Partikel (16) aus hexagonalem Bornitrid nicht größer als 200 µm sind.

13. Sinterpulver nach Anspruch 12, **dadurch gekennzeichnet,**
**dass** die Agglomerate nicht größer als 80 µm sind.

## Claims

1. Lead-free plain bearing material having a sintered matrix (18) of Cu or based on CuSn and a solid lubricant, which contains hexagonal boron nitride, **characterised in that**
the hexagonal boron nitride is present in a fine-grained distribution with a mean particle size of from 5 µm to 7 µm, wherein agglomerates of the particles (16) of hexagonal boron nitride are no greater than 200 µm.

2. Plain bearing material according to claim 1, **characterised in that** the agglomerates are no greater than 80 µm.

3. Plain bearing material according to either of the preceding claims,
**characterised in that**
the agglomerates of the particles are no greater than the mean observed grain size of the sintered matrix (18).

4. Plain bearing material according to claim 3, **characterised in that** the mean observed grain size of the sintered matrix (18), measured in accordance with the ASTM standard E-112, is from 2 to 3.5.

5. Plain bearing material according to any one of the preceding claims,
**characterised in that**
the hexagonal boron nitride is present in a quantity of from 0.05 to 5% by weight of the total composition in the plain bearing material.

6. Plain bearing material according to claim 5, **characterised in that** the hexagonal boron nitride is present in a quantity of from 0.5 to 1 % by weight of the total composition in the plain bearing material.

7. Plain bearing material according to any one of the preceding claims, **characterised in that** the matrix (18) has from 0 to 10% by weight of tin.

8. Plain bearing material according to claim 7,
**characterised in that** the matrix (18) is formed from a CuSn6Ni or a CuSn8Ni bronze.

9. Plain bearing material according to any one of the preceding claims,
**characterised by**
a hard phase formed by at least one substance from the group comprising Fe3P,MoSi2, c-BN.

10. Plain bearing composite material having a steel support layer (12) and a sintered-on bearing metal layer (14) of a plain bearing material according to any one of the preceding claims.

11. Sliding element of a plain bearing composite material according to claim 10.

12. Sintering powder for producing a plain bearing material according to any one of claims 1 to 9 having a matrix powder of Cu or based on CuSn and having particles (16) of hexagonal boron nitride, **characterised in that** the particles (16) of hexagonal boron nitride are present in a fine-grained distribution with a mean grain size of from 5 µm to 7 µm, wherein agglomerates of the particles (16) of hexagonal boron nitride are no greater than 200 µm.

13. Sintering powder according to claim 12, **characterised in that** the agglomerates are no greater than 80 µm.

## Revendications

1. Matériau pour palier lisse sans plomb, comprenant une matrice frittée (18) en Cu ou à base de CuSn et un lubrifiant solide, qui contient du nitrure de bore hexagonal, **caractérisé en ce que** le nitrure de bore hexagonal est présent en une distribution à grains fins ayant une taille de particule moyenne de 5 µm à 7 µm, des agglomérats des particules (16) de nitrure de bore hexagonal n'étant pas supérieurs à 200 µm.

2. Matériau pour palier lisse selon la revendication 1, **caractérisé en ce que** les agglomérats ne sont pas supérieurs à 80 µm.

3. Matériau pour palier lisse selon l'une quelconque des revendications précédentes, **caractérisé en ce que** les agglomérats des particules ne sont pas supérieurs à la taille de grain moyenne observée de la matrice frittée (18).

4. Matériau pour palier lisse selon la revendication 3, **caractérisé en ce que** la taille de grain moyenne observée de la matrice frittée (18), mesurée selon la norme ASTM E-112, est de 2 à 3,5.

5. Matériau pour palier lisse selon l'une quelconque des revendications précédentes, **caractérisé en ce que** le nitrure de bore hexagonal est présent en une quantité de 0,05 à 5 % en poids de la composition totale dans le matériau pour palier lisse.

6. Matériau pour palier lisse selon la revendication 5, **caractérisé en ce que** le nitrure de bore hexagonal est présent en une quantité de 0,5 à 1 % en poids de la composition totale dans le matériau pour palier lisse.

7. Matériau pour palier lisse selon l'une quelconque des revendications précédentes, **caractérisé en ce que** la matrice (18) comprend 0 à 10 % en poids d'étain.

8. Matériau pour palier lisse selon la revendication 7, **caractérisé en ce que** la matrice (18) est formée par un bronze de CuSn₆Ni ou CuSn₈Ni.

9. Matériau pour palier lisse selon l'une quelconque des revendications précédentes, **caractérisé par** une phase dure formée par au moins une substance du groupe constitué par Fe₃P, MoSi₂, c-BN.

10. Matériau composite pour palier lisse comprenant une couche support en acier (12) et une couche métallique frittée pour palier (14) en un matériau pour palier lisse selon l'une quelconque des revendications précédentes.

11. Élément lisse en un matériau composite pour palier lisse selon la revendication 10.

12. Poudre de frittage pour la fabrication d'un matériau pour palier lisse selon l'une quelconque des revendications 1 à 9, comprenant une poudre de matrice en Cu ou à base de CuSn et des particules (16) de nitrure de bore hexagonal, **caractérisée en ce que** les particules (16) de nitrure de bore hexagonal sont présentes en une distribution à grains fins ayant une taille de grain moyenne de 5 µm à 7 µm, des agglomérats des particules (16) de nitrure de bore hexagonal n'étant pas supérieurs à 200 µm.

13. Poudre de frittage selon la revendication 12, **caractérisée en ce que** les agglomérats ne sont pas supérieurs à 80 µm.
